# EUROPEAN PATENT APPLICATION

(11) **EP 2 256 907 A1**
(43) Date of publication of application: **01.12.2010**
(21) Application number: 09160469.4
(22) Date of filing: 18.05.2009
(51) Int. Cl.: H02K 9/06, H02K 1/27, H02K 5/128, H02K 5/15, H02K 9/04

(54) **An electric machine**

(71) Applicant: Bombardier Transportation GmbH, 10785 Berlin (DE)
(72) Inventor: Blom, Ola, SE-754 30, UPPSALA (SE)
(74) Representative: Olsson, Jan

(57) **Abstract**

The invention relates to an electric machine with a stator (1) having a stator body (2) with a stator winding (4) wound therearound and configured to electrically create a plurality of stator poles (3) disposed around the inner periphery of the stator body while extending with end turns (6,7) thereof at opposite axial ends of the stator body beyond end surfaces (10,11) thereof. A rotor (12) is rotatably disposed within the stator and has a plurality of permanent magnets (14). Means (18) is arranged to generate a flow of air for cooling parts of the electric machine. Elements (22) seal off the rotor and a space (16) separating the rotor and the stator for preventing said air flow from reaching the rotor and said space.

## Description

### TECHNICAL FIELD OF THE INVENTION AND BACKGROUND ART

The present invention relates to an electric machine comprising a stator having a stator body with a stator winding wound therearound and configured to electrically create a plurality of stator poles disposed around the inner periphery of the stator body while extending with end turns thereof at opposite axial ends of the stator body beyond end surfaces thereof, means configured to connect said stator winding to an AC source or receiver, a rotor rotatably disposed within said stator and having a plurality of permanent magnets, and means configured to generate a flow of air for cooling parts of the electric machine.

Such an electric machine may operate as motor and/or generator, although this disclosure will focus mainly on the operation thereof as a motor.

By using a plurality of permanent magnets to produce the magnetic flux of the rotor a synchronous motor called permanent magnet synchronous motor is achieved. Such a motor has lower rotor losses compared to an induction motor and thus higher efficiency. It can also be built with a higher pole number, compared to an induction motor, without sacrificing performance, so that it can have a higher torque capability.

The present invention is particularly applicable to electric machines in the form of a motors of the type defined in the introduction for creating a traction force of a track-bound vehicle, especially a rail vehicle, and this application of such an electric machine will mainly be discussed below without for that sake restricting the invention thereto. Such a motor, which of course may function as a generator when braking the vehicle, is particularly advantageous for such a vehicle for which a high torque capability with respect to a determined size of the motor is an important feature.

Such an electric machine is cooled by said flow of air for being able to operate at a certain power when functioning as a motor and deliver a certain power in the case of generator function without for that sake causing the temperature of sensitive parts of the machine or surrounding equipment to be so high that these parts, especially electrical insulating elements of the machine, are destroyed or the function of the machine or parts thereof disturbed. Electric machines of this type may be divided into two main categories with respect to the way of cooling thereof by a said flow of air.

The first category is called open machine, which means that said cooling air flow passes through the entire machine, i.e. reaching the stator as well as the rotor and the space separating the rotor and the stator. An advantage of this type of cooling is that it is efficient, since the air may absorb heat from a large total surface of the machine. However, fouling and contamination may occur as a result of dust, especially metal dust reaching the rotor and sticking thereto as a consequence of the presence of the permanent magnets. In the case of such an electric machine used for creating a traction force in a track-bound vehicle such a motor is located in a tough environment in which a lot of dust is created, such as metal dust from braking discs and which may through the cooling air reach the rotor and influence the proper function of the machine.

Electric machines according to the other, second category are called closed machines, which means that the cooling air flow only runs on the outside of the periphery of the stator body, which means that the stator winding and the rotor are sealed off. An advantage of this type of cooling is that the problems of fouling and contamination will be much smaller than for a machine of the first category. However, the cooling of such a machine will be less effective, since the machine offers a smaller total hot surface for heat exchange with the flow of cooling air. This means that the maximum power produced or consumed by such an electric machine will be lower for machines of this category.

### SUMMARY OF THE INVENTION

The object of the present invention is to provide an electric machine of the type defined in the introduction being improved in at least some respect with respect to such electric machines already known.

This object is according to the invention obtained by providing such an electric machine, which further comprises an arrangement for directing the flow of air generated by said means and which comprises elements sealing the rotor and a space separating the rotor and the stator for preventing said air flow from reaching the rotor and said space as well as elements directing at least a part of said cooling air flow towards said stator winding end turns at at least one of said ends of the stator body for cooling thereof.

By the fact that said cooling air flow will reach said stator winding end turns and still the rotor and the space separating the rotor and the stator are sealed for preventing said air flow from reaching the rotor and said space the advantages of better cooling of an electric machine of the first category are combined with the advantage of an electric machine according to the second category when it comes to less problems with fouling and contamination. This means that a higher power may be produced/consumed by the electric machine without reaching a temperature which may be harmful to parts of the electric machine and/or the environment of the electric machine, such as other types of equipment located close thereto.

According to an embodiment of the invention said arrangement is configured to direct said cooling air to pass stator winding end turns at both said ends of said stator body, which results in a substantially improved efficiency of the cooling with respect to an electric machine of said second category without for that sake jeopardizing the function thereof as a consequence of exaggerated fouling and/or contaminations.

According to another embodiment of the invention said sealing elements are designed to sealingly connect to said end surfaces of said stator body surrounding an annular opening into said space. This constitutes a simple and reliable way of obtaining sealing off of the rotor and said space.

According to another embodiment of the invention said air flow generating means is arranged at one said end of said stator body so as to generate a flow of air substantially axially with respect to an axis of rotation of said rotor towards the other end of the stator body. This constitutes a suitable location of said air flow generating means.

According to another embodiment of the invention the electric machine is of the so-called self-ventilated type, i.e. said air flow generating means is configured to be driven by rotation of the rotor. The reliability of such air flow generating means is high, and the air flow is then advantageously obtained by connecting an impeller of a fan of said means directly to the axle of the rotor.

According to another embodiment of the invention the electric machine is of the so-called forced-ventilated type, i.e. it comprises members separated from said rotor for driving said air flow generating means. Such separated driving of said air flow generating means makes it possible to vary the cooling capacity of this means independently of the number of revolutions of the rotor for obtaining an optimum adaption of the cooling efficiency to the power generated/consumed by the electric machine and environmental conditions.

According to other embodiments of the invention said permanent magnets are buried in a body of the rotor or said permanent magnets are mounted at or close to the outer peripheral surface of the rotor.

The invention also relates to a track-bound vehicle electric machine according to the above. The advantages of an electric machine of this type are especially accentuated for the case of a track-bound vehicle electric machine as a consequence of the particular environment residing next to such a machine.

The invention also relates to a driving arrangement for a track-bound vehicle, which comprises an electric machine according to the above, as well as a use of an electric machine according to the above in a driving arrangement for generating a traction force of a track-bound vehicle.

Finally, the invention is also directed to a track-bound vehicle having a driving arrangement for generating a traction force of the vehicle including at least one electric machine according to the above. Such a track-bound vehicle may be operated at high power thanks to the high torque capability with respect to the size of an electric machine of this type and the efficient cooling thereof resulting in high possible powers consumed/generated by the machine.

Further advantages as well as advantageous features of the invention will appear from the following description of embodiments of the invention.

### BRIEF DESCRIPTION OF THE DRAWINGS

With reference to the appended drawings below follows a specific description of embodiments of the invention cited as examples.

In the drawings:
- Fig 1: is a very schematic side elevation view illustrating the stator and the rotor of an electric machine of the type, to which the present invention relates,
- Fig 2: is a perspective view of an electric machine accord- ing to a first embodiment of the present invention,
- Fig 3: shows the machine according to Fig 2 in a longitudi- nal cross-section view,
- Fig 4: is a perspective view similar to the view according Fig 2 with an outer fan casing removed, and
- Fig 5: is a view similar to Fig 4 of an electric machine ac- cording to a second embodiment of the invention.

### DETAILED DESCRIPTION OF EMBODIMENTS OF THE INVENTION

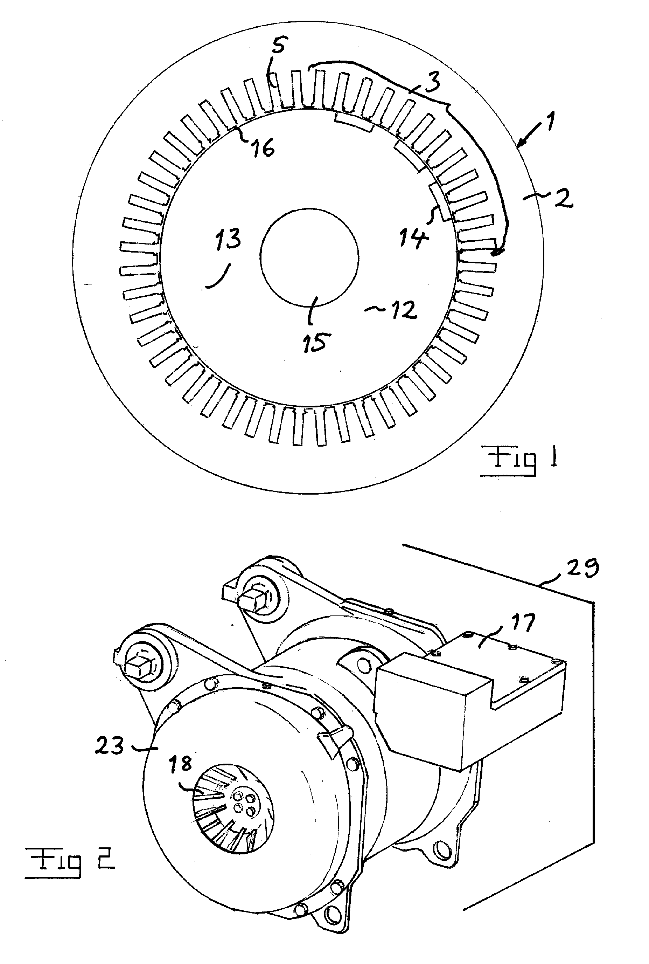

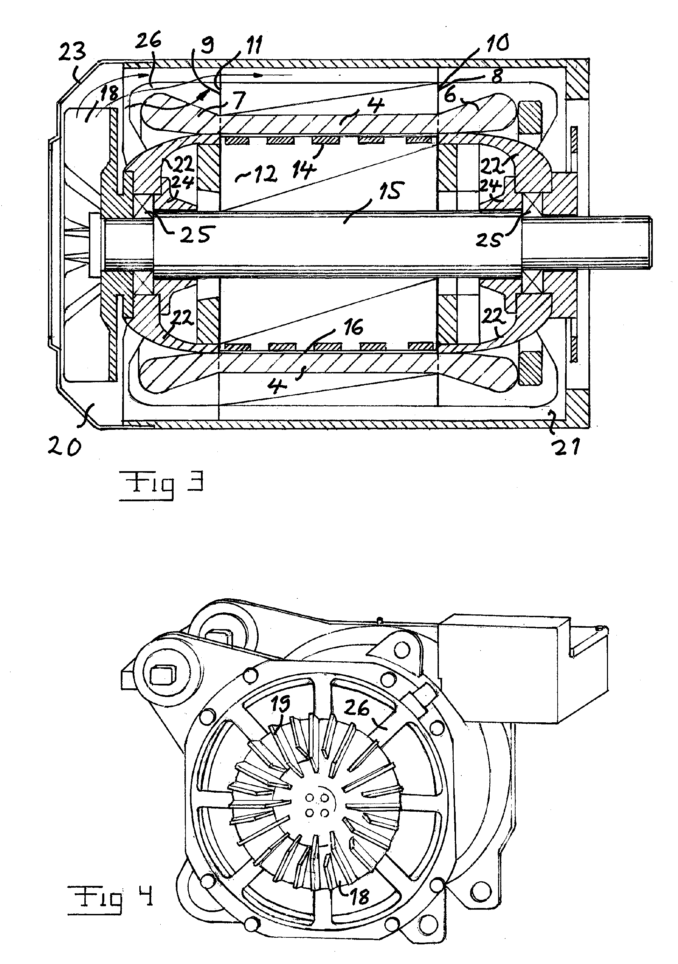

Fig 1 shows schematically in an axial end view some of the main parts of an electric machine of the type to which the present invention relates. This electric machine has a stator 1 with a stator body 2 provided with a stator winding 4 wound therearound and configured to electrically create a plurality of stator poles 3 disposed around the inner periphery of the stator body. The stator winding 4 is not shown in Fig 1 but schematically illustrated in Fig 3 at 4. This stator winding is wound around said stator body by being received in radial slots 5 in the stator body, extending over the entire length of said body. 48 slots are in this way uniformly distributed around the inner periphery of the stator body 2, so that 12 said slots belong to one stator pole in the case of a four-poles electric machine. Each of 48 coils of the stator winding extends with end turns 6, 7 thereof at opposite axial ends 8, 9 of the stator body beyond end surfaces 10, 11 thereof.

The electric machine further comprises a rotor 12 with a rotor body 13 rotatably disposed within said stator and having a plurality of permanent magnets 14 of which only some are very schematically indicated. The rotor body 13 is rigidly connected with respect to rotation to a rotor axle 15, which in the case of a track-bound vehicle electric machine is connected to the wheel axle of the vehicle, possibly through a gear box.

An annular space 16 separates the rotor and the stator. Reference is now also made to Figs 2-4. The electric machine has also means configured to connect the stator winding to an AC source or receiver, which in the present case is an AC-supply line or a diesel driven generator of the vehicle 29 schematically indicated. However, any type of AC source is conceivable, and the alternating current may very well be created by an inverter connected to a direct voltage source on the other side thereof and for instance controlled according to a Pulse Width Modulation pattern. The box 17 in Fig 2 indicates control equipment for the electric machine, such as a converter. "AC receiver" refers in this disclosure to the case of an electric machine operating in the generator mode.

The electric machine has means configured to generate a flow of air for cooling parts of the electric machine, and this means includes an impeller 18 with blades 19 fixed to the rotor axle 15 at one end 20 of the stator body so as to generate a flow of air substantially axially with respect to an axis of rotation of the rotor towards the other end 21 of the stator body. The electric machine has an arrangement for directing the flow of air generated by the impeller 18 and which comprises elements 22 sealing the rotor and the space 16 separating the rotor and the stator for preventing the air flow generated by the impeller 18 from reaching the rotor and said space. These elements 22 direct together with a fan casing 23 said cooling air flow towards said stator winding end turns 6, 7 for cooling thereof.

The sealing elements 22 are designed to sealingly connect to said end surfaces 10, 11 of said stator body surrounding an annular opening into said space 16. These elements also connect to a body 24 receiving bearings 25 for the rotor for efficiently seal off the rotor with respect to said cooling air flow.

The fan casing is removed in Fig 4, so that spokes 26 holding the respective sealing element 22 in place are made visible. Furthermore, it is pointed out that the winding end turns which should be visible in Fig 4 have been left out for simplifying this view.

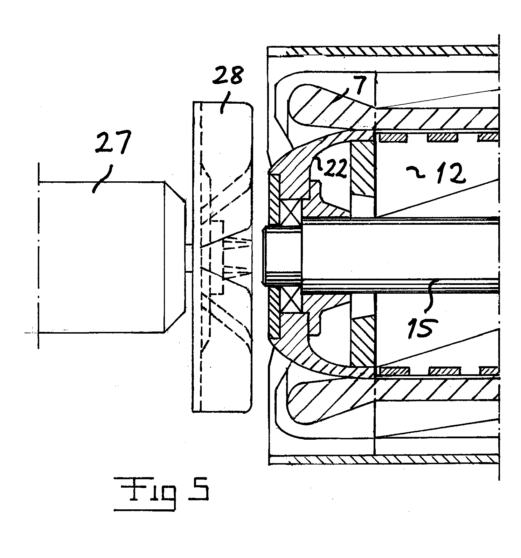

Fig 5 schematically illustrates an electric machine according to another embodiment of the invention, which differs from the one according to Fig 4 by the fact that the air flow generating means comprises members 27 separated from the rotor for driving air flow generating means in the form of an impeller 28 independently of the rotation of the rotor. Other parts of the electric machine according to this embodiment are provided with the same reference numerals as the corresponding parts in the embodiment according to Figs 2-4.

Thanks to the fact that the stator winding end turns 6, 7 may in this way be efficiently cooled a substantially higher power may be generated/consumed by an electric machine of this type without reaching a too high temperature than would these winding end turns be sealed. Problems with fouling and contaminations are at the same time kept at a low level thanks to the sealing off of the rotor and the space separating the rotor and the stator body with respect to said cooling air flow.

The invention is of course not in any way restricted to the embodiments described above, but many possibilities to modifications thereof will be apparent to a person with skill in the art without departing from the scope of the invention as defined in the appended claims.

Said air flow generating means or fan is in the embodiment shown in Fig 3 designed to press the air through the motor, but it may just as well be designed to draw air from the opposite side of the motor to the side where this means is located.

## Claims

1. An electric machine comprising:
• a stator (1) having a stator body (2) with a stator winding (4) wound therearound and configured to electrically create a plurality of stator poles (3) disposed around the inner periphery of the stator while extending with end turns (6, 7) thereof at opposite axial ends (8, 9) of the stator body beyond end surfaces (10, 11) thereof,
• means configured to connect said stator winding to an AC source or receiver,
• a rotor (12) rotatably disposed within said stator and having a plurality of permanent magnets (14), and
• means (18) configured to generate a flow of air for cooling parts of the electric machine,
**characterized in that** it further comprises an arrangement for directing the flow of air generated by said means and which comprises elements (22) sealing the rotor and a space (16) separating the rotor and the stator for preventing said air flow from reaching the rotor (2) and said space as well as elements (23) directing at least a part of said cooling air flow towards said stator winding end turns (6, 7) at at least one of said ends of the stator body for cooling thereof.

2. An electric machine according to claim 1, **characterized in that** said arrangement is configured to direct said cooling air to pass stator winding end turns (6, 7) at both said ends of said stator body.

3. An electric machine according to claim 1 or 2, **characterized in that** said sealing elements (22) are designed to sealingly connect to said end surfaces (10, 11) of said stator body (2) surrounding an annular opening into said space (16).

4. An electric machine according to any of the preceding claims, **characterized in that** said air flow generating means (18) is arranged at one said end of said stator body (2) so as to generate a flow of air substantially axially with respect to an axis of rotation of said rotor (12) towards the other end of the stator body.

5. An electric machine according to any of the preceding claims, **characterized in that** it is of the so-called self-ventilated type, i.e. said air flow generating means (18) is configured to be driven by rotation of the rotor (12).

6. An electric machine according to any of claims 1-4, **characterized in that** it is of the so-called forced-ventilated type, i.e. it comprises members (27) separated from said rotor (12) for driving said air flow generating means (28).

7. An electric machine according to any of the preceding claims, **characterized in that** said permanent magnets are buried in a body of the rotor.

8. An electric machine according to any of claims 1-6, **characterized in that** said permanent magnets are mounted at or close to the outer peripheral surface of the rotor.

9. A track-bound vehicle electric machine according to any of claims 1-8.

10. A driving arrangement for a track-bound vehicle, **characterized in that** it comprises an electric machine according to claim 9.

11. Use of an electric machine according to any of claims 1-8 in a driving arrangement for generating a traction force of a track-bound vehicle (29).

12. A track-bound vehicle having a driving arrangement for generating a traction force of the vehicle including at least one electric machine according to any of claims 1-8.
